# EUROPEAN PATENT APPLICATION

(11) **EP 0 715 471 A2**
(43) Date of publication of application: **05.06.1996**
(21) Application number: 95308375.5
(22) Date of filing: 22.11.1995
(51) Int. Cl.: H04N 9/83

(54) **VTR mode discrimination method and discriminator therefor**

(30) Priority: 29.11.1994 JP 319271/94; 21.06.1995 JP 178183/95
(71) Applicant: HITACHI, LTD., Chiyoda-ku, Tokyo 100 (JP); HITACHI TOHBU SEMICONDUCTOR LTD., Iruma-gun Saitama (JP)
(72) Inventor: Furihata, Makoto, Maebashi-shi, Gunma (JP); Yamauchi, Kenya, Takasaki-shi, Gunma (JP); Jin, Takashi, Moroyama-machi, Iruma-gun, Saitama (JP)
(74) Representative: Calderbank, Thomas Roger

(57) **Abstract**

A signal, which is delayed from a color under signal by two horizontal periods (1), and the color under signal are phase-shifted by +45 degrees (3) and -45 degrees (2) respectively and added or subtracted (4) so that whether the color under signal is of the PAL system or of the SECAM system is judged by utilizing the change in the arithmetic output of every horizontal period. Moreover, a color under signal fed from an input terminal is delayed by two horizontal periods by a delay circuit (1), and the input color under signal and the delayed color under signal are phase-shifted by +45 degrees and by -45 degrees, respectively, by phase circuits (2,3). These two signals are added or subtracted by an arithmetic circuit (4) so that whether the mode is of the PAL system or the SECAM system is judged by detecting the change in the arithmetic circuit for every horizontal period by a signal detector (5-9).

## Description

The present invention relates to a VTR (Video Tape Recorder) mode discrimination method and a discriminator for the method and, more particularly, to a technique which is effective when applied for discriminating color under signals of the PAL (Phase Alternation by Line) system from the ones of the SECAM (Séquentiel Couleur á Mémoire) system inputted to a VTR device of the color under system such as the VHS, S-VHS or 8 mm system. Here, the term "mode" is referred to a color system (e.g., the PAL system or the SECAM system).

In a home VTR, the color under signal is recorded by a color under system. In this system, the brightness signal has its frequency modulated, and the color signal has its frequency converted into a frequency band lower than the converted frequency of the brightness signal so that it is recorded on the slant track of a magnetic tape by a rotary video head. At the reproduction time, the color video signal on the slant track is traced by the video head for the reproduction so that the brightness signal has its frequency demodulated whereas the color signal has its frequency converted to a high frequency.

The color systems are divided into the NTSC (National Television System Committee) system adopted in Japan, the U.S.A. Canada etc., the PAL system adopted in Europe, China and Southeast Asia, etc., and the SECAM system adopted in France and Russia, etc. Of these, the PAL system and the SECAM system are mixedly adopted in Europe, and VTR devices in this area are required to be adapted to the two PAL and SECAM systems. For this requirement, the VTR devices are further required to have a function to judge at the recording time whether the reception color system is of the PAL system or of the SECAM system, and a function to discriminate at the reproduction time the reproduced color signal of the PAL system from the one of the SECAM system (or MESECAM system).

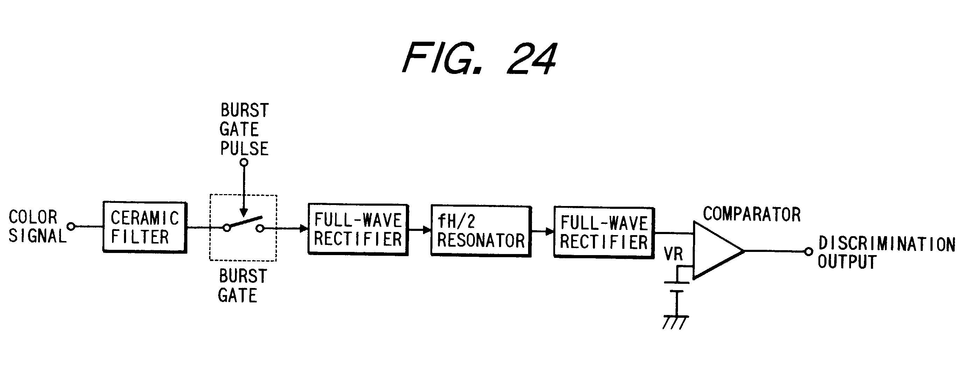

Fig. 24 is a block diagram showing a discriminator we have investigated prior to the present invention. The burst signal in the PAL system color system has a frequency of 4.433618 MHz. In the case of the SECAM system color system, the so-called "ID (IDentify) signal" of 4.25 MHz or 4.40625 MHz exists in place of the burst signal for each horizontal period. As a result, a ceramic filter is used to detect the 4.25 MHz component or the 4.40625 MHz component of the SECAM system color signal, and it is utilized that the component occurs every other horizontal components. Specifically, the output signal of the ceramic filter is rectified through a burst gate by a full-wave rectifier, and a harmonic signal is detected by a resonator of two horizontal periods. Then, it is judged that the system belongs to the SECAM, if the tuning signal exists, and to the PAL if only the burst signal of the same level such as the PAL system color signal is detected for every horizontal periods but no tuning signal exists for two horizontal periods.

The discriminator, as described above, is required to have relatively expensive parts such as the ceramic filter, and the resonator of two horizontal periods needs an inductance having a large volume of several mH. These requirements raise a serious cause of obstruction of reductions in the size, weight and cost of VTR devices.

A preferred object of the present invention is to provide a VTR mode discrimination method suited for a semi-conductor integrated circuit and a discriminator for the method. The foregoing and other objects and novel features of the present invention will become apparent from the following description to be made with reference to the accompanying drawings.

In a first aspect of the present invention, a signal, which is delayed from a color under signal by two horizontal periods, and the color under signal are phase-shifted by + 45 degrees and -45 degrees and added or subtracted so that whether the mode is of the PAL system or the SECAM system is judged by utilizing the change in the arithmetic output of each horizontal period.

By the above-specified means, the signal processing includes the signal delay, the phase shift and the subtraction or addition so that the mode can be identified by an internal circuit formed in a semiconductor integrated circuit.

In a second aspect of the present invention, a color under signal, fed from an input terminal, is delayed by two horizontal periods by a delay circuit, and the input color under signal and the delayed color under signal are phase-shifted by +45 degrees and by -45 degrees, respectively, by phase circuits. These two signals are added or subtracted by an arithmetic circuit so that whether the mode is of the PAL system or the SECAM system is judged by detecting the change in the arithmetic circuit for each horizontal period by a signal detector.

By the above-specified means, the mode discrimination can be done by using the delay circuit, the phase circuits and the arithmetic circuit, which can be realized by a semiconductor integrated circuit. In the drawings
Fig. 1 is a block diagram showing one embodiment of a VTR mode discriminator according to the present invention;
Fig. 2 is a basic block diagram for explaining one embodiment of a VTR mode discriminating method and a discriminator according to the present invention;
Fig. 3 is a basic block diagram for explaining another embodiment of a VTR mode discriminating method and a discriminator according to the present invention;
Fig. 4 is a signal vector diagram showing the phases of color under signals in the channel 1, during the PAL input time in a record mode and a set PAL mode, with reference to the phase of a horizontal synchronizing signal, for explaining the present invention;
Fig. 5 is a signal vector diagram showing the phases of color under signals in the channel 2, during the PAL input time in a record mode and a set PAL mode, with reference to the phase of a horizontal synchronizing signal, for explaining the present invention;
Fig. 6 is a signal vector diagram showing the phases of color under signals in the channel 1, during the SECAM input time in a record mode and a set PAL mode, with reference to the phase of a horizontal synchronizing signal, for explaining the present invention;
Fig. 7 is a signal vector diagram showing the phases of color under signals in the channel 1, during the SECAM input time in a record mode and a set PAL mode, with reference to the phase of a horizontal synchronizing signal, for explaining the present invention;
Fig. 8 is a signal vector diagram showing the phases of color under signals in the channel 2, during the SECAM input time in a record mode and a set PAL mode, with reference to the phase of a horizontal synchronizing signal, for explaining the present invention;
Fig. 9 is a signal vector diagram showing the phases of color under signals in the channel 2, during the SECAM input time in a record mode and a set PAL mode, with reference to the phase of a horizontal synchronizing signal, for explaining the present invention;
Fig. 10 is a signal vector diagram showing the phases of color under signals in the channel 1, during the PAL input time in a reproduction mode and a set PAL mode, with reference to the phase of a horizontal synchronizing signal, for explaining the present invention;
Fig. 11 is a signal vector diagram showing the phases of color under signals in the channel 2, during the PAL input time in a reproduction mode and a set PAL mode, with reference to the phase of a horizontal synchronizing signal, for explaining the present invention;
Fig. 12 is a signal vector diagram showing the phases of color under signals in the channel 1, during the SECAM input time in a reproduction mode and a set PAL mode, with reference to the phase of a horizontal synchronizing signal, for explaining the present invention;
Fig. 13 is a signal vector diagram showing the phases of color under signals in the channel 1, during the SECAM input time in a reproduction mode and a set PAL mode, with reference to the phase of a horizontal synchronizing signal, for explaining the present invention;
Fig. 14 is a signal vector diagram showing the phases of color under signals in the channel 2, during the SECAM input time in a reproduction mode and a set PAL mode, with reference to the phase of a horizontal synchronizing signal, for explaining the present invention;
Fig. 15 is a signal vector diagram showing the phases of color under signals in the channel 2, during the SECAM input time in a reproduction mode and a set PAL mode, with reference to the phase of a horizontal synchronizing signal, for explaining the present invention;
Fig. 16 is a waveform diagram for explaining the operation of a signal detector in Fig. 1;
Fig. 17 is a block diagram showing one embodiment of a VTR signal processor in a record mode, equipped with the discriminator according to the present invention;
Fig. 18 is a block diagram showing one embodiment of a VTR signal processor in a record mode, equipped with the discriminator according to the present invention;
Fig. 19 is a block diagram showing one embodiment of a VTR signal processor in a reproduction mode, equipped with the mode discriminator according to the present invention;
Fig. 20 is a block diagram showing one embodiment of a VTR signal processor in a reproduction mode, equipped with the mode discriminator according to the present invention;
Fig. 21 is a block diagram showing one embodiment of a VTR system using the mode discriminator according to the present invention;
Fig. 22A is a block diagram showing the VTR signal processor in the NTSC mode;
Fig. 22B is a block diagram showing the VTR signal processor in the PAL/SECAM mode;
Fig. 22C is a block diagram showing the VTR signal processor in the multi-mode adapted to all the NTSC mode, the PAL mode and the SECAM mode;
Fig. 23 is a schematic block diagram showing the entirety of one embodiment of the VTR signal processor in which the discriminator of the present invention is incorporated; and
Fig. 24 is a block diagram showing one example of the discriminator the inventors have investigated prior to the present invention.

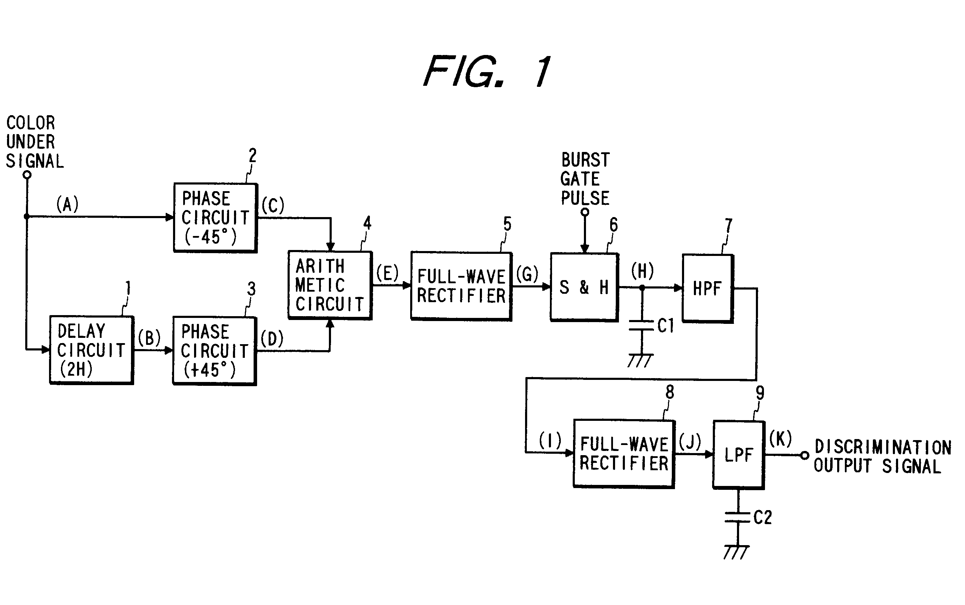

Fig. 1 is a block diagram showing one embodiment of a VTR mode discriminator according to the present invention. The individual circuit blocks of Fig. 1 are formed together with the later-described VTR signal processing circuit on a semiconductor substrate such as of single crystalline silicon by a well-known semiconductor integrated circuit manufacturing technology.

A VTR device, adapted to both the PAL system and the SECAM system, is required to discriminate both which of a color under signal of the PAL system and a color under signal of the SECAM system is being inputted to the aforementioned VTR device when the VTR device is in the PAL mode and which of the color under signal of the PAL system and the color under signal of the SECAM system is being inputted to the VTR device when the VTR device is in the SECAM mode. In the PAL mode or the SECAM mode, moreover, it is necessary to discriminate both a record mode and a reproduction mode.

The following circuit is used to make it possible to correctly discriminate the color under signal of the PAL system from the one of the SECAM system the color, under any conditions. A color signal (A) is the color signal which has its frequency converted into a low-range frequency (hereinafter referred to as the "color under signal"). This signal (A) is used to discriminate the PAL system from the SECAM system.

The above-specified color under signal (A) is delayed by two horizontal periods (2H) by a delay circuit 1. In this embodiment, the delay circuit 1 is constructed of a CCD (Charge Transfer Device). The aforementioned color under signal (A) and the delayed color under signal (B) have their phases shifted by -45 degrees and +45 degrees, respectively, by phase circuits 2 and 3, and they are inputted to an arithmetic circuit 4. These phase circuits 2 and 3 may be inversely constructed, as will be described hereinafter. In short, the input color under signal (A) may have its phase shifted by +45 degrees, and the delayed color under signal (B) may have its phase shifted by -45 degrees.

The arithmetic circuit 4 is composed of an adder or subtracter for adding or subtracting the phase-shifted signals (C) and (D), as described above. The discrimination of the PAL/SECAM can be executed by making use of the change in the output signal (E) of the arithmetic circuit 4 for every horizontal period.

In this embodiment, the aforementioned PAL/SECAM discrimination is executed by the following signal detector, although not especially limited thereto. Specifically, the signal detector is composed of a first FW rectifier 5, a sampling & hold circuit (hereinafter also referred to as the "S&H") 6, a high-pass filter (hereinafter also referred to as the "HPF") 7, a second FW rectifier 8, a low-pass filter (hereinafter also referred to as the "LPF") 9, and capacitors C1 and C2. The aforementioned output signal (E) is full-wave rectified by the first FW rectifier 5. This full-wave rectified output signal (G) is sampled by the input signal inputted in response to a burst gate pulse and is inputted to the sampling & hold circuit 6 to be held in a capacitor C1 for a period other than the sampling period. The signal (H), held in the capacitor C1, is differentiated by the high-pass filter 7 to produce a differential output signal (I) corresponding to the signal change.

This differential output signal (I) is subjected to a full-wave rectification by the second FW rectifier 8. This rectified output signal (J) of the second FW rectifier 8 is smoothed by the low-pass filter 9 to produce a discrimination signal (K). This low-pass filter 9 comprises a capacitor C2, which is connected, together with the capacitor C1 connected to the aforementioned S&H 6, as the external parts of the semiconductor integrated circuit, although not especially limited thereto. This discrimination signal (K) has its level discriminated by the later-described comparator, although not especially limited thereto, to produce an output signal for judging whether the system is the PAL system or the SECAM system.

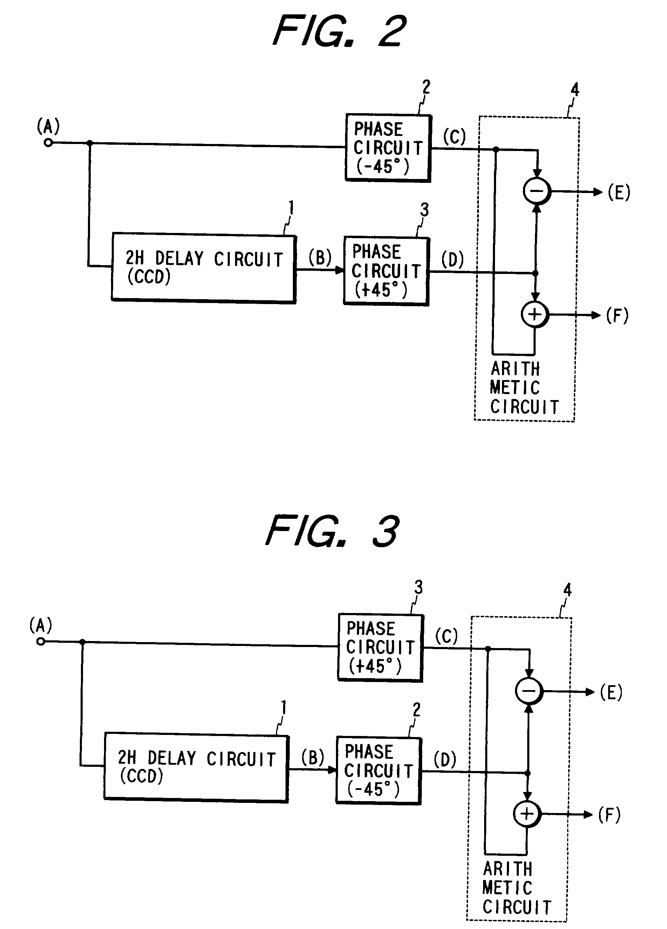

Fig. 2 is a basic block diagram for explaining one embodiment of a VTR mode discriminating method and a discriminator according to the present invention. As in Fig. 1, the color under signal (A) and its delayed signal (B), delayed by the two horizontal periods by the delay circuit, are subjected to phase shift of -45 degrees and + 45 degrees, respectively, by the phase circuits 2 and 3 and are arithmetically operated by an adder (+) and a subtracter (-). The subtraction output (E) is produced by the subtracter (-), and the addition output (F) is outputted from the adder (+).

Fig. 3 is a basic block diagram for explaining another embodiment of a VTR mode discriminating method and a discriminator according to the present invention. This embodiment is constructed such that the phase circuit 2 for the phase shift of -45 degrees and the phase circuit 3 for the phase shift of +45 degrees are interchanged. Specifically, the inputted color under signal (A) is subjected to the phase shift of +45 degrees by the phase circuit 3, and the delayed color under signal (B) is subjected to the phase shift of -45 degrees by the delay circuit 1. Even if the phase shift is thus reversed, the discrimination itself between the PAL/SECAM can be likewise executed.

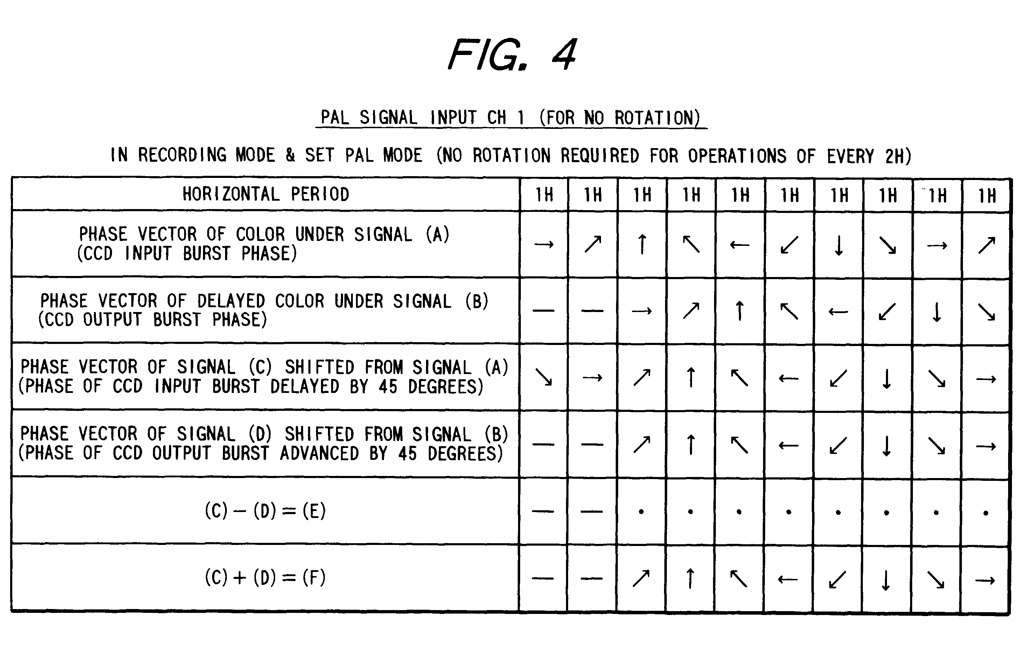

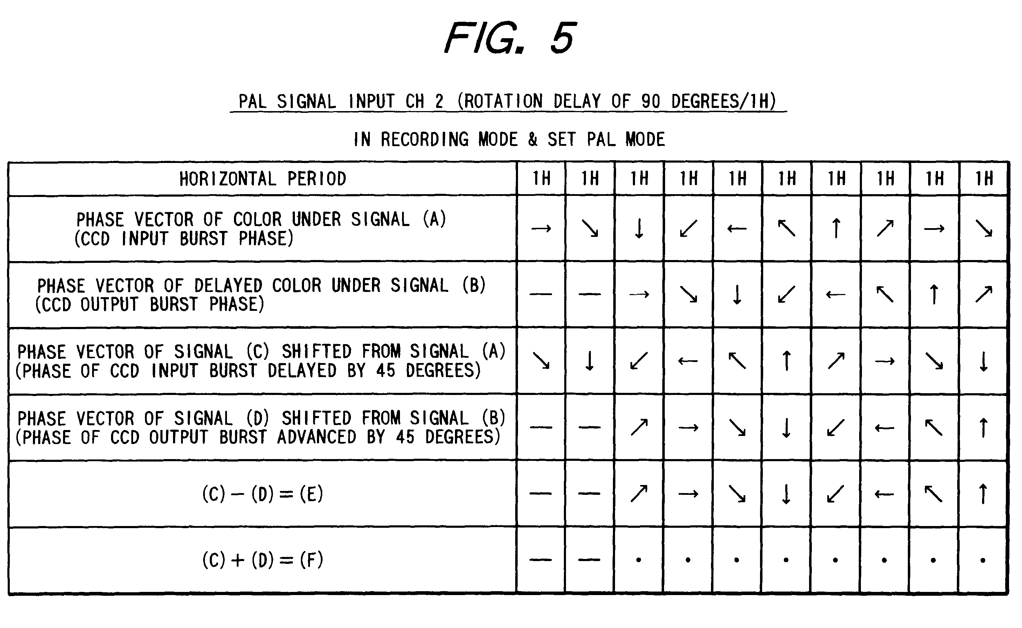

Figs. 4 and 5 are signal vector diagrams showing the phases of color under signals with reference to the phase of a horizontal synchronizing signal, for explaining the present invention. Fig. 4 shows the case of channel 1 (CH1) of the PAL system in the PAL mode when the VTR device (VTR set) is in a record mode, and Fig. 5 shows the case of channel 2 (CH2) at the time. When the VTR device (VTR set) is in the PAL mode, as shown in Figs. 4 and 5, the channels 1 and 2 have such different rotations that in the channel 1 there is no rotation whereas in the channel 2 there is a delay of 90 degrees for every horizontal period (1H).

When the VTR device is in the PAL mode, and in the channel 1, as shown in Fig. 4, the color under signal (A) to be inputted to the delay circuit 1 is so produced as to advance by 45 degrees for every horizontal period. This signal (A) is delayed so as to generate the delay signal (B) by 2H by the delay circuit 1. Then, the signal (C), phase-shifted by -45 degrees from the aforementioned signal (A), is produced by the phase circuit 2, and the signal (D), phase-shifted by +45 degrees from the aforementioned delayed signal (B), is produced by the phase circuit 3. These two signals (C) and (D) have identical phases. They cancel each other when subtraction (C) - (D) is performed, to produce no output signal (E), but the output signal (F) having its output level increased to +6 dB when addition (C) + (D) is performed.

For the channel 2, as shown in Fig. 5, the rotation of -90 degrees is executed for every horizontal period so that the color under signal (A), inputted to the delay circuit 1, is produced to have a delay of 45 degrees for every horizontal period. This signal (A) is delayed so as to generate the delay signal (B) by 2H by the CCD delay circuit. Then, the signal (C), phase-shifted by -45 degrees from the aforementioned signal (A), is produced by the phase circuit 2, and the signal (D), phase-shifted by +45 degrees from the aforementioned delayed signal (B), is produced by the phase circuit 3. These two signals (C) and (D) are opposite in phase to each other, and the output signal (E) is produced to have its output level increased to +6 dB when subtraction (C) - (D) is performed, but they cancel each other, when addition (C) + (D) is performed, to produce no output signal (F).

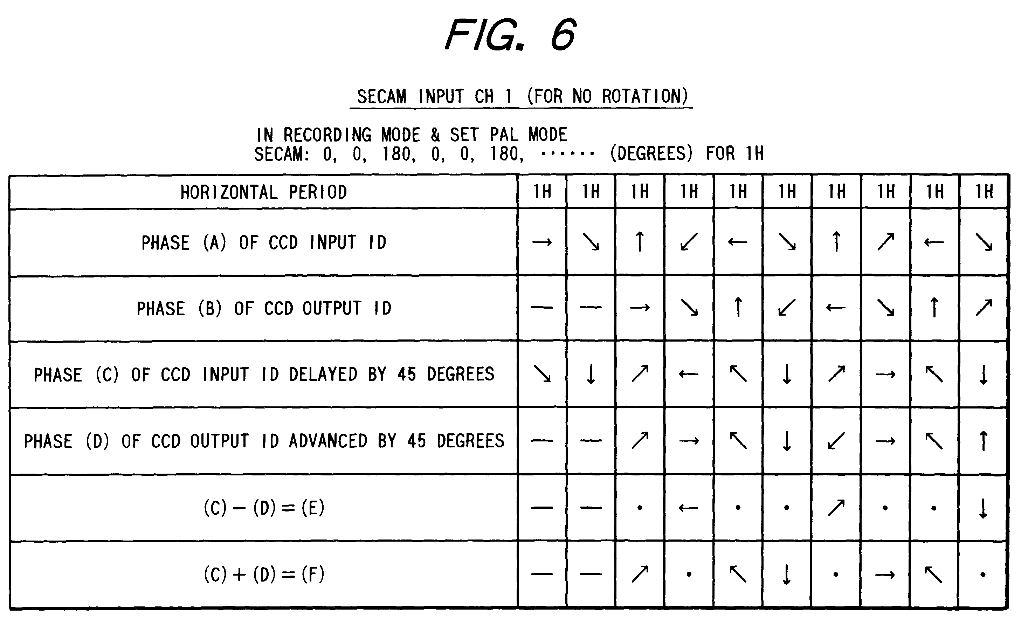

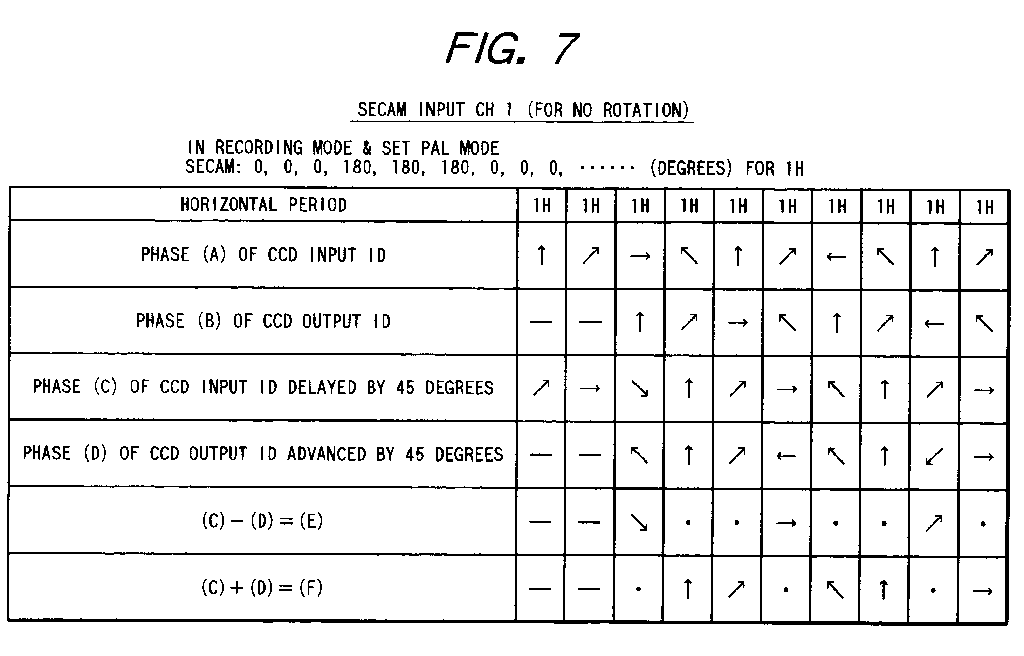

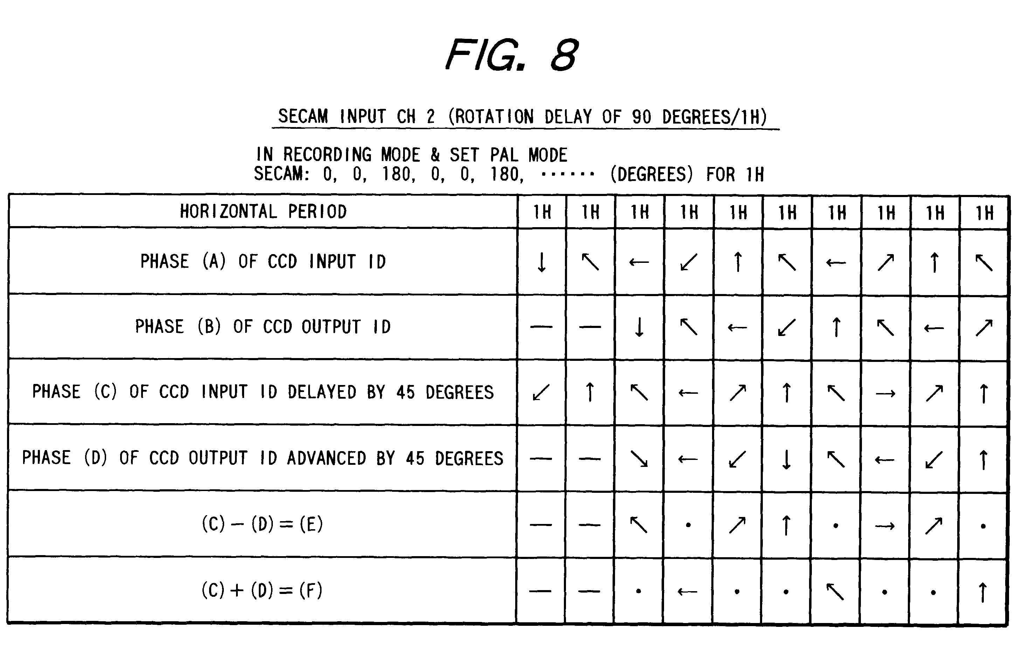

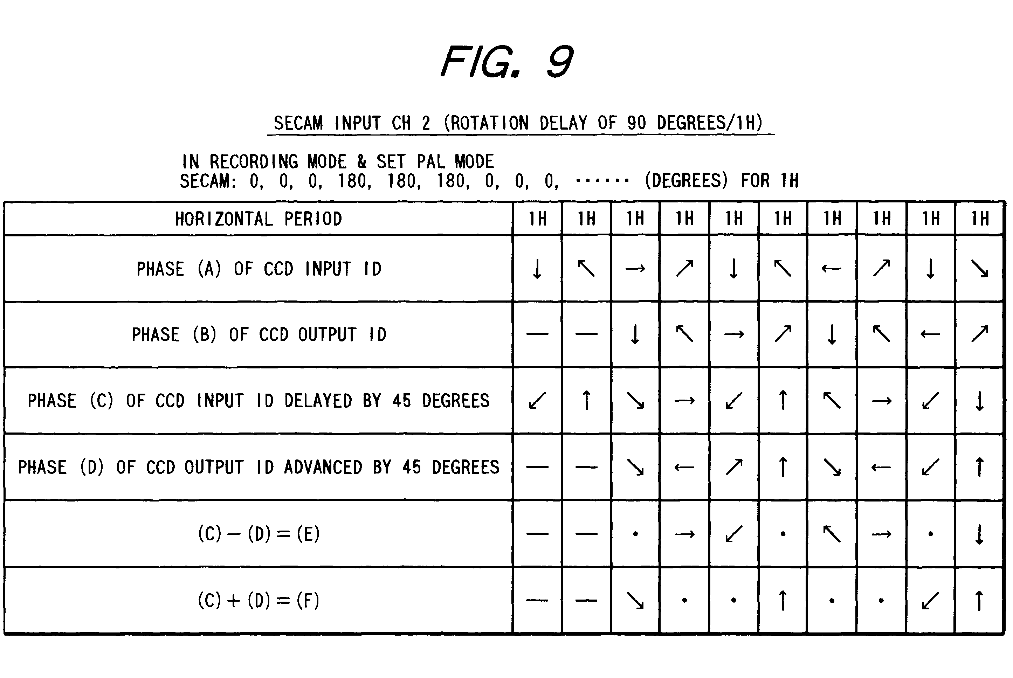

Figs. 6 to 9 are signal vector diagrams showing the phases with reference to the phase of a horizontal synchronizing signal, for explaining the case in which the color under signal of the SECAM system is inputted in the PAL mode when the VTR set is in the record mode. Of these, Figs. 6 and 7 show the case of channel 1 (CH1) in the PAL mode, and Figs. 8 and 9 show the case of channel 2 (CH2).

At present, two systems are used for the phase of the color under signal of the SECAM. The SECAM system color under signal has its B-Y signal started with an ID signal of 272 fH = 4.25 MHz and its R-Y signal started with an ID signal of 282 fH = 4.40625 MHz, but has the following two phase types so as to make the dot obstruction (or the fringe brightness obstruction) of the sub-carrier invisible. (Here, the symbol "fH" represents the horizontal scanning frequency (15.625 KHz).) These two types have their phases cycled for every horizontal period in the sequence of 0, 0, 180, 180, 0, 0, 180 (degrees) and in the sequence of 0, 0, 0, 180, 180, 180, 0, 0, 0, 0 (degrees).

Fig. 6 shows the case in which the sequence is a reversed sequence of 0, 0, 180, 0, 0, 180 (degrees) for every 1H. In this case, subtraction of the signal (C) phase-shifted by -45 degrees from the aforementioned signal (A), and the signal (D) phase-shifted by +45 degrees from the 2H delay signal (B) is performed, and the subtraction output (E) has its ID signal outputted once for every 3H periods (1/3 H). The two signals (C), (D) are added, and the addition output (F) has its ID signal outputted twice for every 3H periods (2/3 H).

Fig. 7 shows the case in which the sequence is a reversed sequence of 0, 0, 0, 180, 180, 180, 0, 0, 0 (degrees) for every 1 H. In this case, subtraction of the signal (C) phase-shifted by -45 degrees from the aforementioned signal (A), and the signal (D) phase-shifted by +45 degrees from the 2H delay signal (B) is performed, and the subtraction output (E) has its ID signal outputted once for every 3H periods (1/3 H). The two signals (C), (D) are added, and the addition output (F) has its ID signal outputted twice for every 3H periods (2/3 H). This means that there is obtained an arithmetic operation result similar to that of the case of Fig. 6, in which the sequence is a reversed the sequence of 0, 0, 180, 0, 0, 180 (degrees) for every 1H.

Fig. 8 shows the case in which the SECAM signal is rotated in the PAL mode with a delay of 90 degrees for every 1H and in which the sequence is a reversed sequence of 0, 0, 180, 0, 0, 180 (degrees) for every 1H, as described above. In this case, subtraction of the signal (C) phase-shifted by -45 degrees from the signal (A), and the signal (D) phase-shifted by +45 degrees from the 2H delay signal (B) is performed, and the subtraction output (E) has its ID signal outputted twice- for every 3H periods (2/3 H). The two signals (C), (D) are added, and the addition output (F) has its ID signal outputted once for every 3H periods (1/3 H).

Fig. 9 shows the case in which the SECAM signal is rotated in the PAL mode with a delay of 90 degrees for every 1H and in which the sequence is a reversed sequence of 0, 0, 0, 180, 180, 180, 0, 0, 0 (degrees) for every 1H, as described above. In this case, subtraction of the signal (C) phase-shifted by -45 degrees from the signal (A), and the signal (D) phase-shifted by +45 degrees from the 2H delay signal (B) is performed, and the subtraction output (E) has its ID signal outputted twice for every 3H periods (2/3 H). The two signals (C), (D) are added, and the addition output (F) has its ID signal outputted once for every 3H periods (1/3 H). This means that there is obtained an arithmetic operation result similar to that of the case of Fig. 8, in which the sequence is a reversed sequence of 0, 0, 180, 0, 0, 180 (degrees) for every 1H.

Incidentally, in the record mode, when the VTR device is in the SECAM mode, neither the channel 1 nor the channel 2 has rotation like that of the channel 2 in the PAL mode so that the arithmetic operation results are identical to those of the channel 1 in the PAL mode. Specifically, when the VTR device is in the SECAM mode, and when the SECAM signal is inputted, the arithmetic operation results of Fig. 4 are obtained and the arithmetic operation results of Fig. 6 or Fig. 7 are obtained when the SECAM signal is inputted. The arithmetic operation results described above are summarized in the following Table 1:

**[Table 1]**

| Set Mode | PAL | | | | SECAM | |
|---|---|---|---|---|---|---|
| | CH1 | | CH2 | | | |
| Arith. Output | (E) | (F) | (E) | (F) | (E) | (F) |
| PAL Input | NO | +6dB | +6dB | NO | NO | +6dB |
| SECAM Input | 1/3H | 2/3H | 2/3H | 1/3H | 1/3H | 2/3H |

The case, in which the phase shift of 45 degrees is inverted, as shown in Fig. 3, is tabulated in Table 2, in which the arithmetic operation results are simplified, correspondingly to Table 1.

**[Table 2]**

| | Set PAL Mode | | | | Set SECAM Mode | |
|---|---|---|---|---|---|---|
| PAL-IN | +6dB | NO | NO | +6dB | +6dB | NO |
| SECAM-IN | 2/3H | 1/3H | 1/3H | 2/3H | 2/3H | 1/3H |

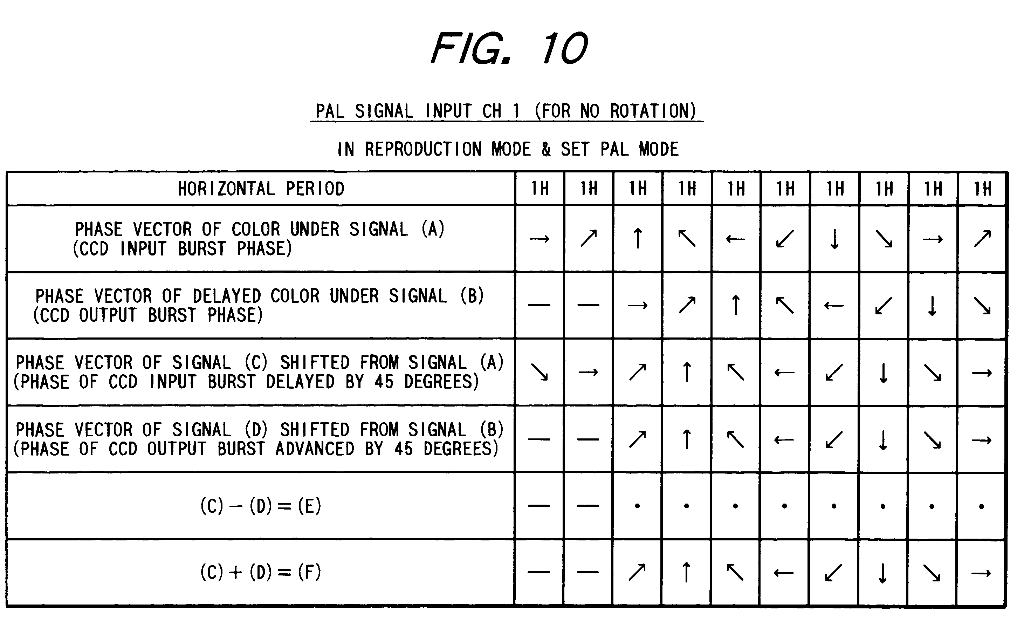

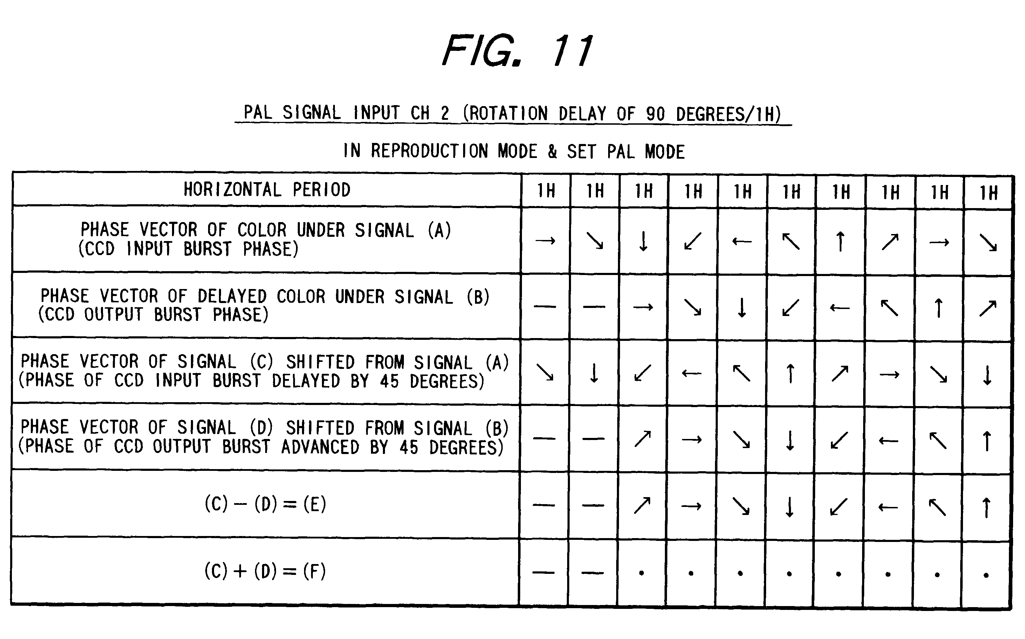

Figs. 10 and 11 are signal vector diagrams showing the phases with reference to the phases of the horizontal synchronizing signal of the color under signal, for explaining the present invention. Fig. 10 shows the case of the channel 1 (CH1) of the PAL system in the PAL mode when the VTR set is in the reproduction mode, and Fig. 11 shows the case of the channel 2 (CH2) at the time. In Figs. 10 and 11, the set is in the PAL mode, and the channels 1 and 2 have different rotations as in the case of the aforementioned record mode, that is, in the channel 1 there is no rotation whereas the channel 2 has a delay of 90 degrees for every horizontal period (1H).

In Fig. 10, in the channel 1 when the set is in the PAL mode, the color under signal (A), inputted to the delay circuit 1, is so produced as to advance by 45 degrees for every horizontal period. This signal (A) is delayed by 2H by the delay circuit 1 so as to generate the delay signal (B). By the phase circuit 2, moreover, there is produced the signal (C) which is phase-shifted by -45 degrees from the aforementioned signal (A). By the phase circuit (3), there is produced the signal (D) which is phase-shifted by +45 degrees from the aforementioned delayed signal (B). These two signals (C) and (D) are in phase. They are canceled, and no output signal is generated when subtraction (C) - (D), is performed, and the output signal (F) having their output increased to +6 dB is generated when addition (C) + (D) is performed.

As shown in Fig. 11, the rotation of -90 degrees is done in the channel 2 for every horizontal period so that the color under signal (A), inputted to the delay circuit 1, is produced with a delay of 45 degrees for every horizontal period. This signal (A) is delayed by 2H by the delay circuit so as to generate the delay signal (B). By the phase circuit 2, moreover, there is produced the signal (C) which is phase-shifted by -45 degrees from the aforementioned signal (A). By the phase circuit (3), there is produced the signal (D) which is phase-shifted by +45 degrees from the aforementioned delayed signal (B). These two signals (C) and (D) have mutually opposite phases to produce the output signal (E) having its output level increased to +6 dB when subtraction (C) - (D) is performed, and are canceled to produce no output signal (F) when addition (C) + (D) is performed.

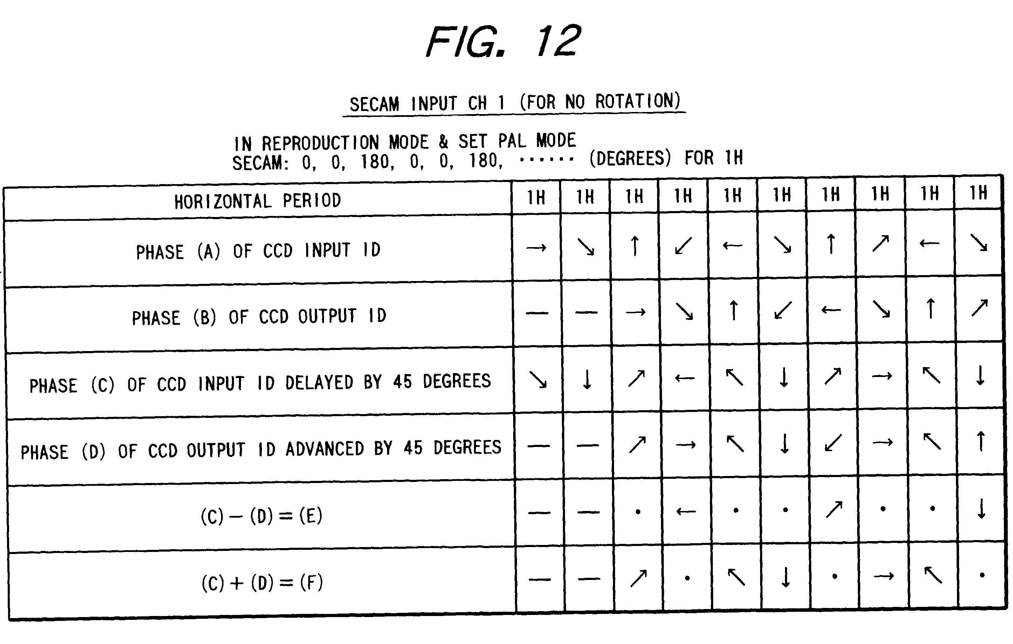

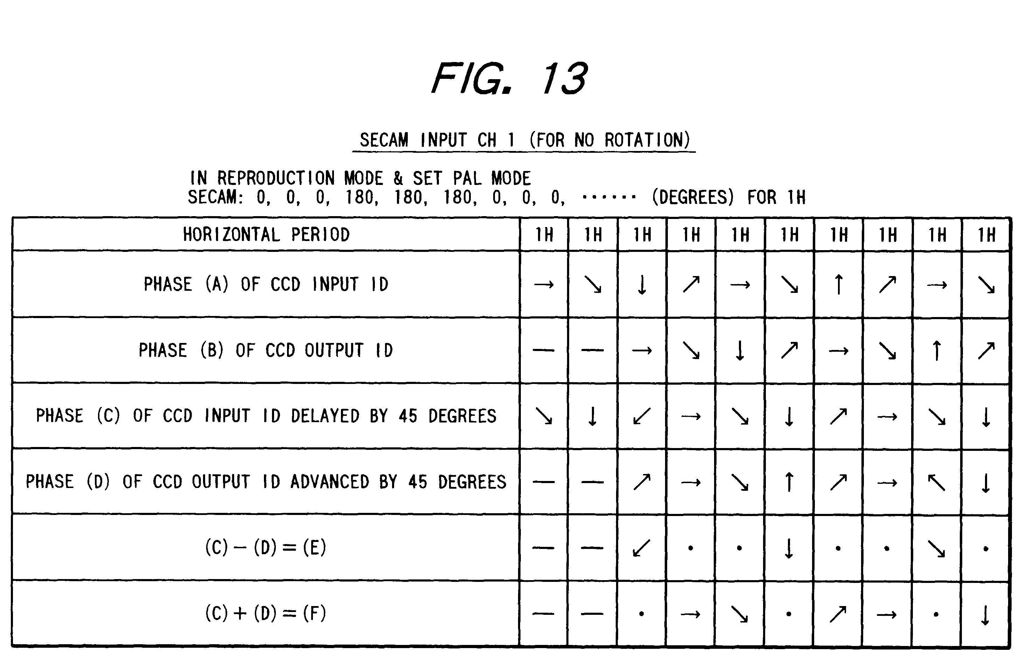

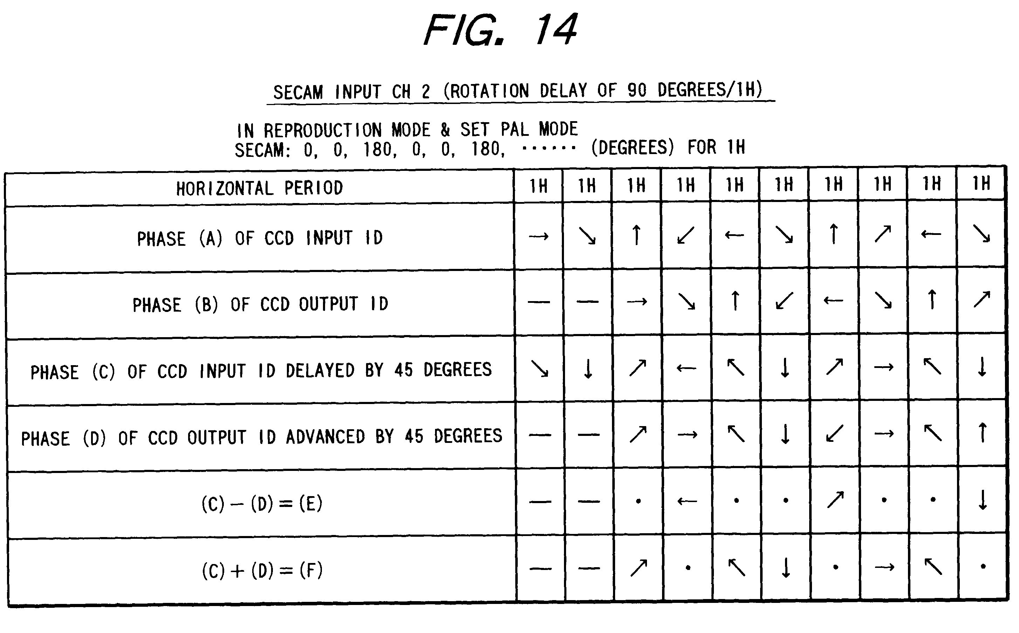

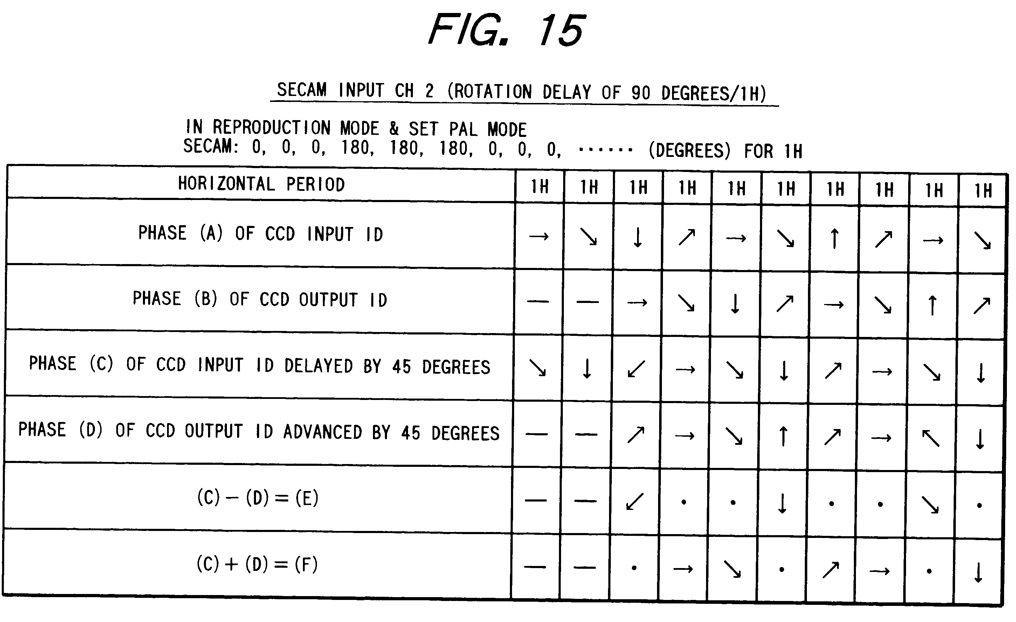

Figs. 12 to 15 are signal vector diagrams showing the phases of the color under signals, which are inputted by the SECAM system in the PAL mode when the VTR set is in the reproduction mode, with reference to the phase of the horizontal synchronizing signal, for explaining the present invention. Of these, Figs. 12 and 13 show the case of the channel 1 (CH1) in the PAL mode, and Figs. 14 and 15 show the case of the channel 2 (CH2).

Fig. 12 shows the case in which the sequence is a reversed sequence of 0, 0, 180, 0, 0, 180 (degrees) for every 1H, as described hereinbefore. In this case, subtraction of the signal (C) phase-shifted by -45 degrees from the aforementioned signal (A), and the signal (D) phase-shifted by +45 degrees from the 2H delay signal (B) is performed, the subtraction output (E) has its ID signal outputted once for every 3H periods (1/3 H). Further the two signals (C), (D) are added and their addition output (F) has its ID signal outputted twice for every 3H periods (2/3 H).

Fig. 13 shows the case in which the sequence is a reversed sequence of 0, 0, 0, 180, 180, 180, 0, 0, 0 (degrees) for every 1H, as described above. In this case, subtraction of the signal (C) phase-shifted by -45 degrees from the aforementioned signal (A), and the signal (D) phase-shifted by +45 degrees from the 2H delay signal (B) is performed, their subtraction output (E) has its ID signal outputted once for every 3H periods (1/3H). Further the two signals (C), (D) are added and their addition output (F) has its ID signal outputted twice for every 3H periods (2/3 H).

Fig. 14 shows the case in which the SECAM signal is rotated in the PAL mode with a delay of 90 degrees for every 1H and in which the sequence is a reversed sequence of 0, 0, 180, 0, 0, 180 (degrees) for every 1H, as described above. In this case, subtraction of the signal (C) phase-shifted by -45 degrees from the aforementioned signal (A), and the signal (D) phase-shifted by +45 degrees from the 2H delay signal (B) is performed, their subtraction output (E) has its ID signal outputted once for every 3H periods (1/3 H). Further the two signals (C), (D) are added, and their addition output (F) has its ID signal outputted twice for every 3H periods (2/3 H).

Fig. 15 shows the case in which the SECAM signal is rotated in the PAL mode with a delay of 90 degrees for every 1H and in which the sequence is a reversed sequence of 0, 0, 0, 180, 180, 180, 0, 0, 0 (degrees) for every 1H, as described above. In this case, subtraction of the signal (C) phase-shifted by -45 degrees from the aforementioned signal (A), and the signal (D) phase-shifted by +45 degrees from the 2H delay signal (B) is performed, their subtraction output (E) has its ID signal outputted once for every 3H periods (1/3H). Further the two signals are added, and their addition output (F) has its ID signal outputted twice for every 3H periods (2/3 H).

**[Table 3]**

| Set Mode | PAL | | | | SECAM | |
|---|---|---|---|---|---|---|
| | CH1 | | CH2 | | | |
| Arith. Output | (E) | (F) | (E) | (F) | (E) | (F) |
| PAL Input | NO | +6dB | +6dB | NO | NO | +6dB |
| SECAM Input | 1/3H | 2/3H | 1/3H | 2/3H | 1/3H | 2/3H |

In the reproduction mode, when the VTR device is in the SECAM mode, neither the channel 1 nor the channel 2 has rotation like that of the channel 2 in the PAL mode so that the arithmetic operation results are identical to those of the channel 1 in the PAL mode. Specifically, when the VTR device is in the SECAM mode, the arithmetic operation results of Fig. 10 are obtained when the SECAM signal is inputted, and the arithmetic operation results of Fig. 12 or Fig. 13 are obtained when the SECAM signal is inputted. The arithmetic operation results described above are summarized in the above Table 3:

**[Table 4]**

| Input | Set PAL Mode | | | | Set SECAM Mode | |
|---|---|---|---|---|---|---|
| PAL | +6dB | NO | NO | +6dB | +6dB | NO |
| ME SECAM | 2/3H | 1/3H | 1/3H | 2/3H | 2/3H | 1/3H |

The case, in which the phase shift of 45 degrees is reversed, as shown in Fig. 3, is tabulated in Table 4, in which the arithmetic operation results are simplified, correspondingly to Table 3.

In the mode discrimination method and the discriminator according to the present invention, as has been described hereinbefore, the color under signal (B) having passed through the two-horizontal period delay circuit and the initial color under signal (A) have their phases shifted by the phase circuits and arithmetic operation of addition or subtraction is performed so that the burst signal amplified by 6 dB or no burst signal is produced due to cancellation for the input of the PAL system color under signal. For the input of the SECAM system color under signal, on the other hand, one or two ID signals are generated for every three horizontal periods.

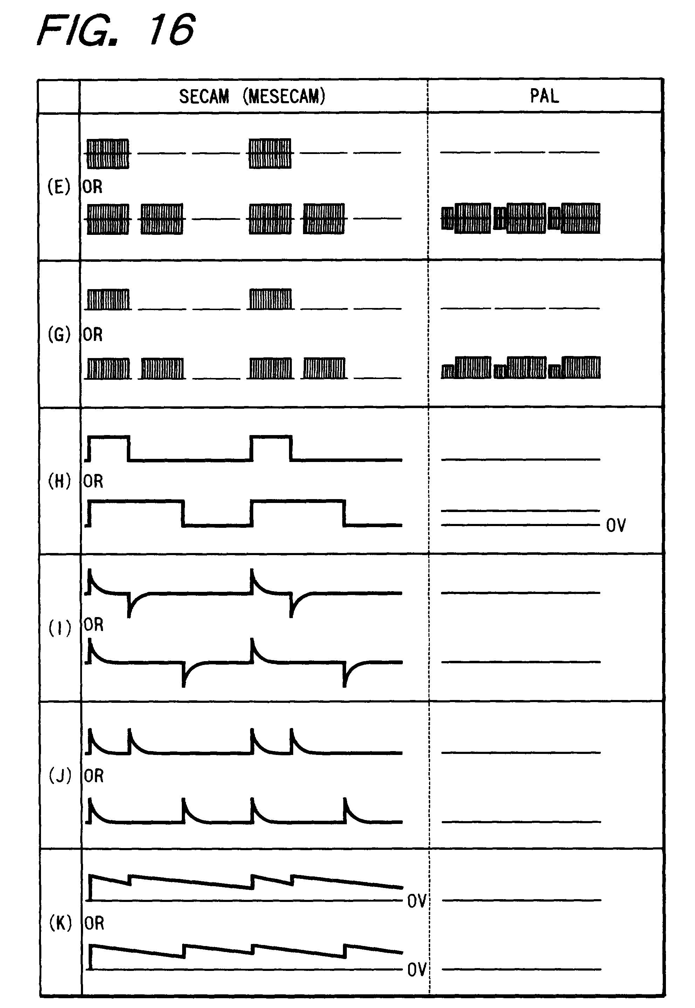

The aforementioned arithmetic operation outputs can be detected by the signal detector of the embodiment of Fig. 1. In short, as shown in the operation waveform diagram of Fig. 16, the aforementioned arithmetic operation results produce the ID signals at a rate of 1/3H or 2/3H for the input of the SECAM (or MESECAM) system and cancel the PAL system input to produce no burst signal or the burst signal amplified by 6 dB.

An output signal (G) is produced by rectifying the aforementioned arithmetic operation output (E) by the FW rectifier 5. This output (E) is sampled and held by use of the burst gate pulse by the S&H 6 to produce the signal (H). For the SECAM system input, more specifically, one period is set to 3H, and there are produced a pulse having a high level for every 1H period and a pulse having the high level for every 2H periods.

If the aforementioned signal (H) is differentiated by the HPF 7, the differential waveform signal (I) is obtained. By this differentiation, both the differential waveform signals (I) of the DC voltages corresponding to no signal which is canceled for the PAL system input, and the burst signal amplified by 6 dB are set to no signal of 0 V. The differential signal (I), as described above, is rectified by the FW rectifier 8 and is smoothed by the LPF to produce the signal (K). Thus, a voltage having a predetermined level is generated for the SECAM system input, and a no signal of 0 V is outputted for the PAL system input. Whether the input color under signal is of the SECAM system or of the PAL system can be judged by discriminating the voltage difference by the comparator or the like.

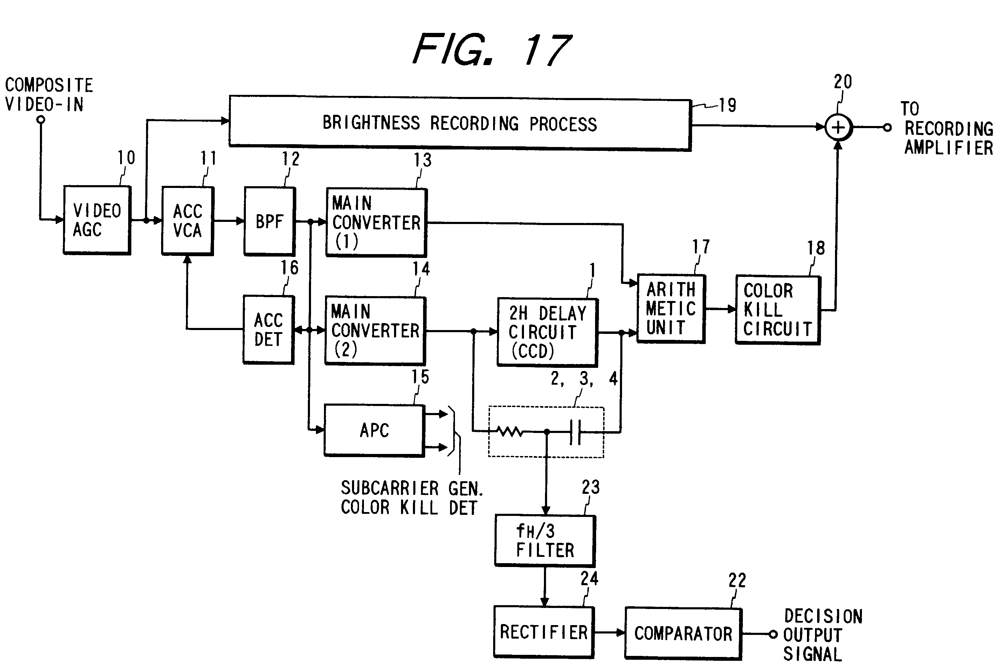

Fig. 17 is a block diagram showing one embodiment of a VTR signal processor in the record mode, equipped with the discriminator according to the present invention. The input composite video signal in the record mode is fed to a video AGC (Automatic Gate Control) circuit 10 for making the signal level constant so that it is separated into a brightness signal and a color signal. The brightness signal is inputted to a brightness recording process 19, in which the brightness signal is frequency-modulated.

The burst signal level of the color signal is made constant by an ACC VCA 11 and an ACC DET. A BPF (Band Pass Filter) 12 removes the brightness signal component to feed the color signal to first and second frequency converters (or main converters) 13 and 14. The ACC DET detects the burst signal to produce a control voltage of the ACC VCA 11.

The color under signal, whose frequency is converted by the aforementioned second frequency converter 14, is delayed by the 2H delay circuit 1. The color under signal produced by the first frequency converter 13, and the color under signal produced by the second frequency converter 14 and delayed by the delay circuit 1, are arithmetically operated by an arithmetic unit 17 constituting a comb-shaped filter called a REC-C-Comb. However, this REC-C-Comb is generally not used in the PAL or the SECAM. In this case, only the color under signal outputted from the first frequency converter 13 is combined by an arithmetic unit 20 with the brightness signal whose frequency is modulated through a color killer 18, and the composite signal is transmitted to the recording amplifier.

In this embodiment, the aforementioned delay circuit 1 is used for the mode discriminator, too. Moreover, the input and output of this mode discriminator are individually fed to the two ends of a series circuit of a resistor and a capacitor forming the phase circuits 2 and 3, and they are added at the node of the resistor and the capacitor. In short, the aforementioned phase circuits 2 and 3 and arithmetic circuit 4 are constructed of a simple series circuit which is composed of the resistor and the capacitor. Moreover, this arithmetic output signal is fed to an f_{H}/3 filter 23 and a rectifier 24, a voltage signal corresponding to the aforementioned ID signal is produced, and its level is detected by a comparator 22 thereby to produce a decision output of the aforementioned SECAM/PAL. In short, referring to Fig. 16, one signal is present in either case of the SECAM system for every three times, as indicated by (E), and the signal is absent or always present in the PAL system. From this, for the horizontal scanning of about 15 KHz, the signal component of one third the frequency, i.e., about 5 KHz is the extracted by a frequency discriminator comprising the aforementioned f_{H}/3 filter 23 and is rectified by the rectifier 24. The system is judged to be the SECAM system, if the signal having the aforementioned component of about 5 KHz is present, but otherwise the PAL system.

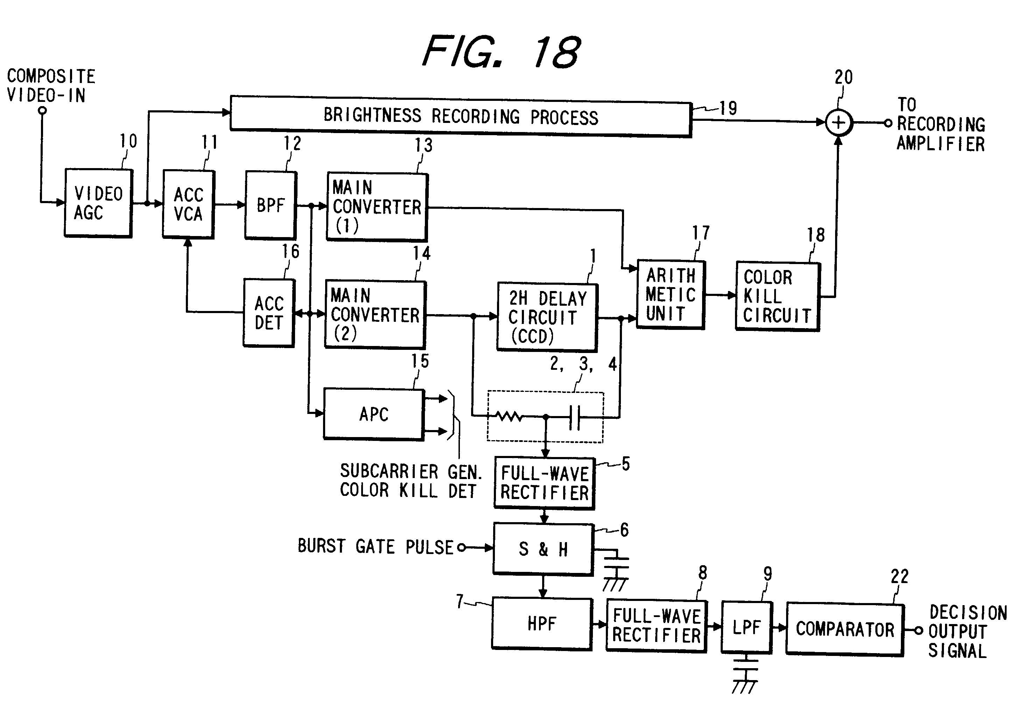

Fig. 18 is a block diagram showing one embodiment of a VTR signal processor in the record mode, equipped with the mode discriminator according to the present invention. Fig. 18 shows a specific construction of one embodiment of the aforementioned f_{H}/3 filter 23 and rectifier 24. In short, as in Fig. 17, the input of the delay circuit 1 are individually fed for the mode discrimination to the two ends of the series circuit which is composed of a resistor and a capacitor constructing the phase circuits 2 and 3, so that the two signals are added at the junction between the resistor and the capacitor. As the signal detectors corresponding to the aforementioned f_{H}/3 filter 23 and rectifier 24, there are used a full-wave amplifier 5, an S&H 6, an HPF 7, a full-wave rectifier 8 and an LPF 9 like the aforementioned ones of Fig. 1. The comparator 22 for discriminate the level of the signal (K) of Fig. 16 is provided to produce the decision output signal of the SECAM/PAL.

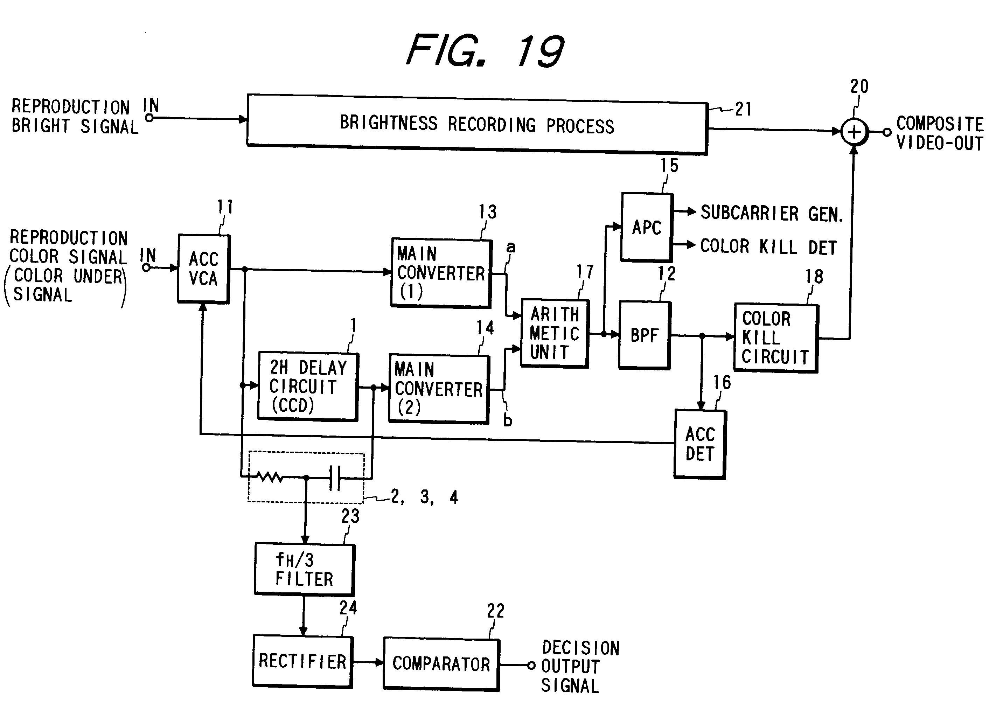

Fig. 19 is a block diagram showing one embodiment of a VTR signal processor in the reproduction mode, equipped with the mode discriminator according to the present invention. The reproduced brightness signal in the reproduction mode is demodulated through the brightness reproducing processor to the frequency of the initial signal waveform.

The reproduced color signal is reproduced by the head as the color under signal whose frequency is converted to a frequency of a low band, amplified by a preamplifier, and inputted to the aforementioned ACC VCA 11. The reproduced color signal is controlled by the ACC VCA 11 and an ACC DET 16 which generates a signal for controlling the ACC VCA 11 as in the recording operation so that the level of the burst signal may be constant.

The color under signal, of which the burst signal level is made constant, has its frequency converted to be used as the standard color signal by the first frequency converter 13. The color under signal is also delayed by the 2H delay circuit 1 or the delay element for delay of two horizontal periods, and fed to the second frequency converter 14 so that it is converted to the standard color signal.

When signals a and b outputted from the first and second frequency converters 13 and 14 are in phase, the signal b is subtracted from the signal a by the arithmetic unit 17, and the doubled crosstalk component is extracted and attenuated by -6 dB to have its level reduced to one half and returned to the crosstalk component. This component is subtracted from the signal a to remove the crosstalk component from the signal a. Alternatively, the signal a and the signal b are added to offset the crosstalk components which are in anti-phase. As a result of this addition, the signal component is doubled to restore the original signal level by the attenuation of -6 dB.

When the phases of the signals a and b, outputted from the first and second frequency converters 13 and 14, are opposite, they are added, and the doubled crosstalk component is extracted and attenuated by -6 dB to have its level reduced to one half and returned to the crosstalk component. This component is subtracted from the signal a to remove the crosstalk component from the signal a. Alternatively, the signal b is subtracted from the signal a to offset the crosstalk components which are in phase. As a result of this subtraction, the signal components in anti-phase are doubled to restore the original signal level by the attenuation of -6 dB.

As a result of the aforementioned arithmetic operations, there is constructed a so-called "C-Comb" for removing the crosstalk. In the case of the SECAM system (MESECAM system), however, since the C-Comb is not executed, only the standard color signal, having its frequency converted by the first frequency converter 13, is outputted without the aforementioned operations.

The standard color signal having its crosstalk removed has its unnecessary components further removed by a band-limit BPF 12 and is added to the brightness signal through the color killer 18 by the adder 20, and it is outputted as the composite signal. The ACC DET detects the color signal fed from the BPF 12 to produce the control voltage for the aforementioned ACC VCA.

In the reproduction mode, too, the signals at the two ends of the CCD 1 as the aforementioned 2H delay circuit are delayed as above by 45 degrees through the resistor and advanced by 45 degrees through the capacitor. The signals thus phase-shifted are extracted and added, so that whether the system is the PAL system or the SECAM (MESECAM) system is judged by using the f_{H}/3 filter 23, the rectifier 24 and the comparator 22 like those described with reference to Fig. 17.

The individual circuit constructions for the record mode of Fig. 17 and for the reproduction mode of Fig. 19 are not made up of different circuits but have their identical circuit blocks switched to the construction of Fig. 17 or Fig. 19 by a mode change switch. The brightness recording/reproducing processors and the color signal processor, as described above, are formed into one semiconductor integrated circuit, although not especially limited thereto. Therefore, the mode discriminator can be incorporated in the VTR signal processing integrated circuit by using the delay circuit 1 (CCD) for the color signal processing as it is and by adding the phase circuit composed of the resistor and the capacitor and the arithmetic circuit.

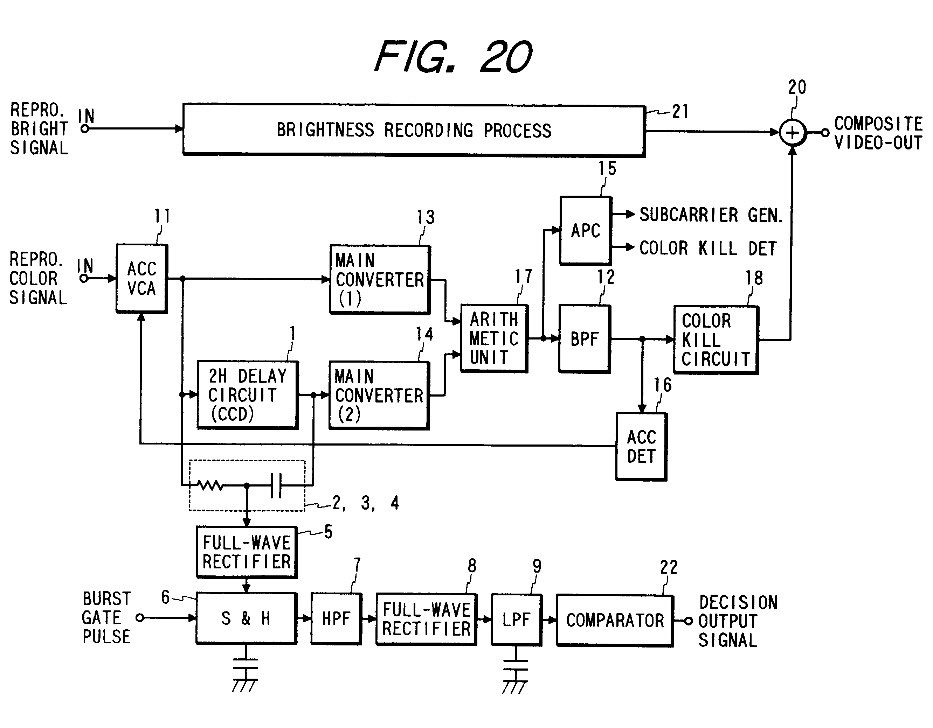

Fig. 20 is a block diagram showing one embodiment of the VTR signal processor in the reproduction mode, equipped with the mode discriminator according to the present invention. Fig. 20 shows a specific construction of one embodiment of the aforementioned f_{H}/3 filter 23 and rectifier 24 of Fig. 19. In short, as in Fig. 19, the input and output of the delay circuit 1 are individually fed for the mode discrimination to the two ends of the series circuit which is composed of the resistor and the capacitor constructing the phase circuits 2 and 3, so that the two signals are added at the junction between the resistor and the capacitor. As the signal detectors corresponding to the aforementioned f_{H}/3 filter 23 and rectifier 24, there are used a full-wave amplifier 5, an S&H 6, an HPF 7, a full-wave rectifier 8 and an LPF 9 like the aforementioned ones of Fig. 1. The comparator 22 for deciding the level of the signal (K) of Fig. 16 is provided to produce the decision output signal of the SECAM/PAL.

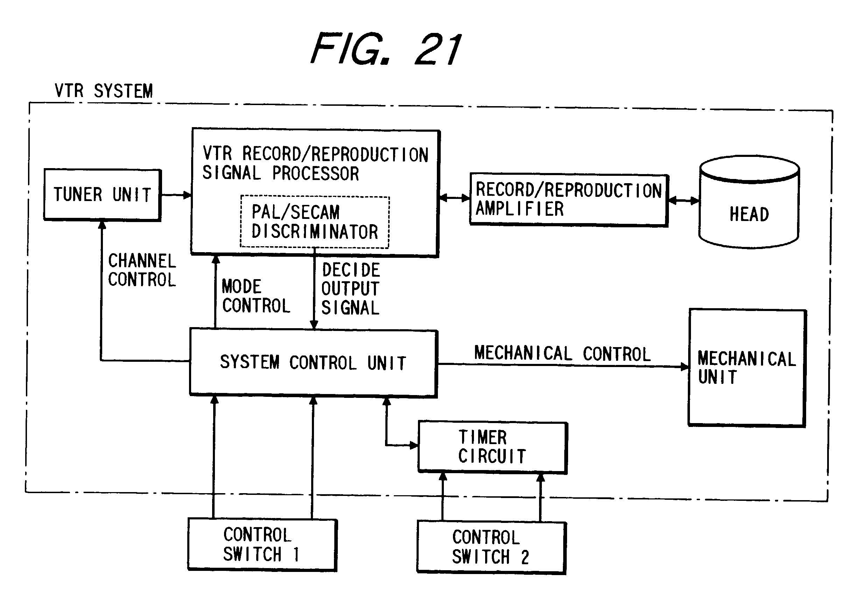

Fig. 21 is a block diagram showing one embodiment of the VTR system using the mode discriminator according to the present invention. The VTR system of this embodiment is roughly constructed of a tuner unit, a VTR recording/reproducing signal processor, a recording/reproducing amplifier a head unit, a mechanical unit, a system control unit, a timer circuit, and control switches 1 and 2. This basic system construction is similar to that of the well-known VTR system, and its detailed description will be omitted.

The mode discriminator according to the present invention is incorporated in the VRT signal processing integrated circuit, which is provided in the afore-mentioned VTR recording/reproducing signal processors, and sends out its decision output from the external terminal. This decision output is fed to the system control unit so that it is used to switch the mode control between the PAL mode and the SECAM mode. In this case, neither the ceramic filter nor the high inductance of several mH is used unlike the prior art so that the VTR system can be reduced in size, weight and cost.

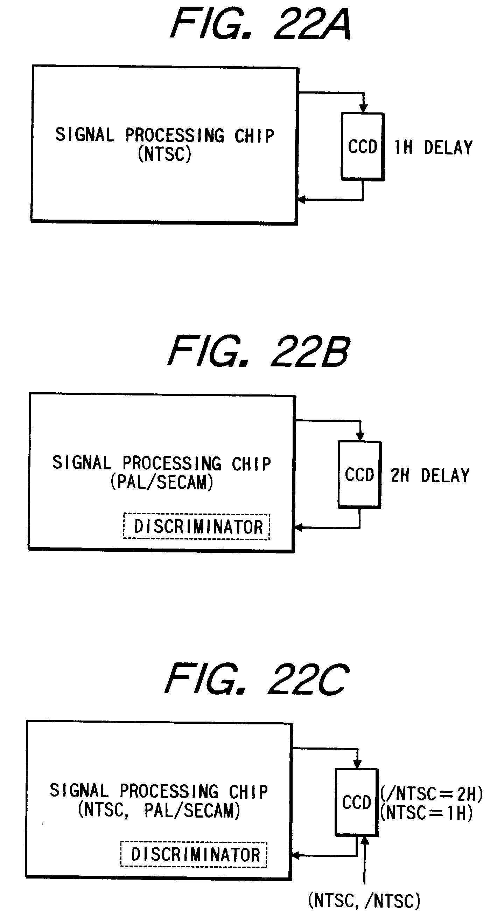

Fig. 22A, Fig. 22B and Fig. 22C are block diagrams of a VTR signal processor for explaining the present invention. Fig. 22A shows the case of the signal processing chip in the NTSC mode VTR. Thus, in the NTSC system, the aforementioned mode discriminator is unnecessary. In this NTSC system, the delay circuit 1 using a CCD effects 1H delay.

Fig. 22B shows the signal processing chip of a PAL/SECAM mode VTR, and a delay circuit 1 using a CCD effects 2H delay. There is mounted a discriminator for discriminating between the PAL system and the SECAM system, and a 2H delay signal by the delay circuit 1 using the CCD is utilized for the discrimination.

Fig. 22C shows the signal processing chip of a multi-mode VTR, which is operated in one of the aforementioned NTSC system and PAL/SECAM system. In this case, the delay time of a delay circuit 1 is different between the NTSC system and the PAL/SECAM system, 1H for the NTSC system and 2H for the PAL/SECAM system. In dependence upon the control signal NTSC and /NTSC, therefore, the 1H delay is executed in the NTSC system in which the signal takes a high level, but the delay is switched to 2H delay in the PAL/SECAM system in which those signals take a low level. In this PAL/SECAM system, moreover, the operation of the discriminator of the present invention is made effective to discriminate between the PAL system and the SECAM system.

In the aforementioned multi-mode of Fig. 22C, the substrate is made common to reduce the cost. In this multi-mode, the signal processing chip and the delay circuit can be shared by switching the delay time of the aforementioned delay circuit to reduce the cost for the VTR device (or VTR set).

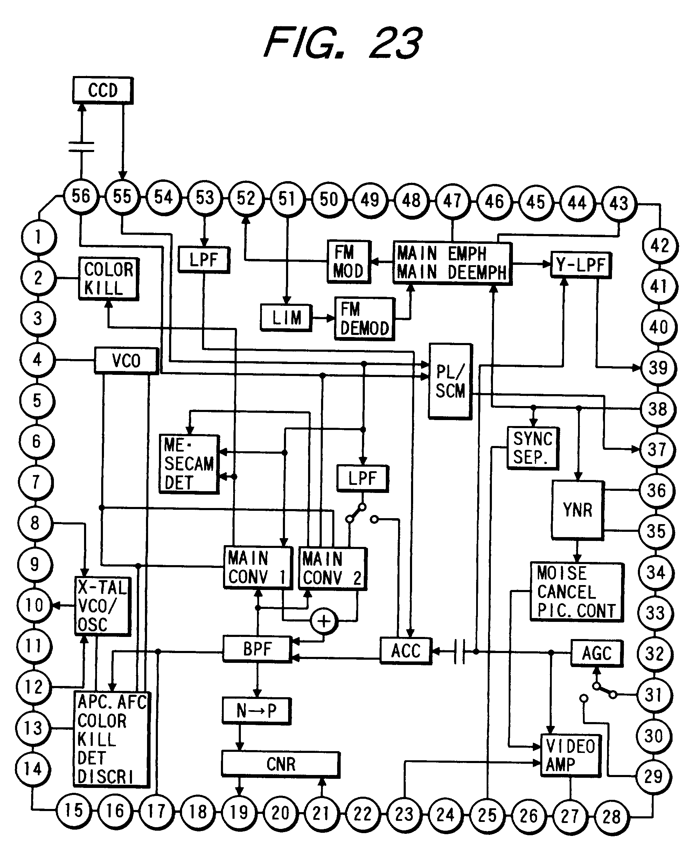

Fig. 23 is a schematic block diagram showing the entirety of one embodiment of the VTR signal processor in which the discriminator of the present invention is incorporated. In Fig. 23, there are shown the external terminals according to the pin arrangement of an actual VTR signal processing integrated circuit. However, the external parts, connected with those external terminals, are represented by only the delay circuit CCD relating to the discriminator according to the present invention, by way of example.

The brightness video circuit is composed of the following circuits. A video input coming from a terminal 31 is fed to an automatic gain amplifier AGC. Incidentally, a terminal 29 is also a video input so that either of those two video inputs is selected by a switch. This video input signal is outputted as it is as the monitoring video output through a video output amplifier Video AMP from a terminal 27. The output signal of the automatic gain amplifier AGC is fed on one hand to a brightness low-pass filter Y-LPF. The output signal of this Y-LPF is fed from a terminal 39 through an external capacitor and a terminal 38 to a main emphasizer Main Emph. The output signal of this emphasizer Main Emph is FM-modulated by an FM modulator FM MOD and is transmitted as a recording FM output through a terminal 52 to the not-shown recording amplifier.

The reproduced FM input, outputted from the not-shown reproduction amplifier, is inputted through a terminal 51 to a limiter LIM. The output signal of this limiter LIM is fed to and FM-demodulated by an FM demodulator FM DEMOD. Moreover, the main de-emphasis corresponding to the aforementioned main emphasizer Main Emph is executed by a main de-emphasizer Main De Emph.

The brightness signal thus FM-demodulated and deemphasized is fed to a low-pass filter Y-LPF used for color separation, by which the high-frequency components mixed in the FM-demodulation are eliminated, and the signal is inputted to a noise canceler YNR Noise and a noise cancel and peak value control circuit Pic Cont. On the other hand, the synchronizing signal is separated by a synchronous separator Sync Sep. The output signal of the aforementioned noise canceler 21 is combined with the color signal, which is reproduced by the later-described color video circuit, by a mixer which is provided in the aforementioned video output amplifier Video AMP, and the composite signal is outputted from the terminal 27.

The color system video signal circuit is composed of the following circuits. The output signal of the automatic gain amplifier AGC of the aforementioned brightness video circuit is fed to an automatic chroma-level controller ACC. The output signal of this automatic chroma-level controller ACC is fed to a band-pass filter BPF. The output signal of this band-pass filter BPF has its frequency converted by frequency converters Main Convl and Main Conv2. The color signal having its frequency thus converted is outputted as the recording color output from the terminal 2 through a color killer amplifier Color Kill also serving as the recording amplifier.

The reproduced color input is taken in from a terminal 53 through the low-pass filter LPF. This output signal is fed to the frequency converter Main Convl. This frequency-converted output is outputted from a terminal 19 through the aforementioned band-pass filter BPF and noise canceler CNR, inputted through the external capacitor from a terminal 23, combined with the aforementioned brightness signal by the mixer provided in the aforementioned video output amplifier Video AMP, and the combined signal is outputted from the terminal 27. Incidentally, there is also included a voltage control type oscillator VCO for producing a signal necessary for the aforementioned frequency conversion, which will not be described because it has no direct relation to the present invention.

The delay circuit CCD receives a signal outputted from a terminal 56 through a capacitor, and delays it by 2H and inputs the delayed signal to a terminal 55. This 2H delay signal is not only used for the frequency conversion, as described above, but also inputted to a discriminator PL/SCM according to the present invention. The output signal of this discriminator PL/SCM is outputted from a terminal 37.

The effects to be obtained from the foregoing embodiments are as follows:
(1) In a discrimination method of examining the change in the arithmetic output for every horizontal period by phase-shifting the signal, which is delayed from the color under signal by two horizontal periods, and the color under signal, respectively, by +45 degrees and by -45 degrees and then by adding or subtracting the phase-shifted signals, there can be attained an effect that the signal processings are the signal delay, the phase-shifting and the subtraction or addition, so that the PAL/SECAM mode discrimination can be done by the internal circuits which is formed in the semiconductor integrated circuit.
(2) The color under signal is converted into the first standard color signal by the first frequency converter whereas the delayed color under signal is converted into the second standard color signal by the second frequency converter, and the first and second standard color signals are set in phase or in anti-phase and are subtracted or added to remove the color crosstalk components between tracks. As a result, there can be attained another effect that the signal delay can be used for both the color signal processing and the mode discrimination.
(3) The color under signal, fed from the input terminal, is delayed by the delay circuit by two horizontal periods, and the input color under signal and the delayed color under signal are phase-shifted, respectively, by +45 degrees and by -45 degrees by the phase circuits and added or subtracted by the arithmetic circuit, so that whether the system is the PAL system or the SECAM system is judged by detecting the change in the arithmetic output for every horizontal period by the signal detector. As a result, there can be attained another effect that the mode discriminator can be provided in the color signal processing integrated circuit.
(4) The phase circuits and the arithmetic circuit are composed of the resistance element and the capacitor in series, which are fed at the two ends with the color under signal fed from the input terminal and the delayed color under signal, so that the arithmetic output is obtained from the junction between the resistance element and the capacitor. As a result, there can be attained another effect that the phase shift and the arithmetic operations can be realized by the simple circuit.
(5) Thanks to the feature of the arithmetic output obtained from the junction between the resistance element and the capacitor, the following effect is achieved. By using a simple structure for extracting the f_{H}/3 component and rectifying it, it is possible to judge that the system is the SECAM system when the f_{H}/3 component is detected, and judges that it is the PAL system when not detected.
(6) As the signal detector, the first full-wave rectifier for receiving the arithmetic output; the sampling & hold circuit for sampling and holding the output of the first full-wave rectifier with the burst gate pulse; the high-pass filter for differentiating the output signal of the sampling & hold circuit; the second full-wave rectifier for rectifying the output signal of the high-pass filter; and the low-pass filter for smoothing the output signal of the second full-wave rectifier are used. As a result, there can be attained another effect that the simple circuit can be incorporated in the semiconductor integrated circuit.
(7) The color under signal inputted to the delay circuit is fed to the first frequency converter for outputting the first standard color signal; the delayed color under signal is fed to the second frequency converter for outputting the second standard color signal; and the first and second standard color signals, which are outputted from the first and second frequency converters, are set in phase or in anti-phase and fed to the arithmetic circuit so that the color crosstalk component between tracks is removed by subtracting or adding the first and second standard color signals. As a result, there can be attained another effect that the delay circuit for processing the color under signal can be used as it is for the mode discriminator.
(8) Thanks to the aforementioned effects (1) to (7), the PAL/SECAM mode can be discriminated without using any ceramic filter and any large-sized inductance of several mH. As a result, there can be attained another effect that the VTR device having the mode discriminator mounted thereon can be reduced in size, weight and cost.

Although our invention has been specifically described with reference to its embodiments, it should not be limited to the foregoing embodiments but can naturally be modified in various manners without departing from the gist thereof. For example, the signal detector may be any type as long as it can discriminate the arithmetic output such as the signal (E). In view of the pulse signal, as denoted by (H) in the same Figure, two kinds of pulses are outputted in the SECAM mode, and either 0 V or a constant voltage is outputted in the PAL mode. Noting this, the SECAM and the PAL can be discriminated by detecting whether or not the pulse is present. The present invention can be widely used as a VTR mode discrimination method and a discriminator adapted to both the two SECAM and PAL systems.

The effects brought about by the representative one of the invention disclosed herein will be briefly described in the following. Specifically, in a discrimination method of examining the change in the arithmetic output for every horizontal period by phase-shifting the signal which is delayed from the color under signal by two horizontal periods, and the color under signal, respectively, by +45 degrees and by -45 degrees and then by adding or subtracting the phase-shifted signals. As a result, since the signal processings are the signal delay, the phase-shifting and the subtraction or addition, the PAL/SECAM mode discrimination can be done by the internal circuit which is formed in the semiconductor integrated circuit.

The color under signal is converted into the first standard color signal by the first frequency converter whereas the delayed color under signal is converted into the second standard color signal by the second frequency converter, and the first and second standard color signals are set in phase and in anti-phase and are subtracted or added to remove the color crosstalk component between tracks. As a result, the signal delay can be used for both the color signal processing and the mode discrimination.

The color under signal, fed from the input terminal, is delayed by the delay circuit by two horizontal periods, and the input color under signal and the delayed color under signal are phase-shifted, respectively, by +45 degrees and by -45 degrees by the phase circuits and added or subtracted by the arithmetic circuit, so that the PAL system and the SECAM system are discriminated by detecting the change in the arithmetic output for every horizontal period by the signal detector. As a result, the mode discriminator can be incorporated in the color signal processing integrated circuit.

The phase circuits and the arithmetic circuit are composed of the resistance element and the capacitor in series, which are fed at the two ends with the color under signal fed from the input terminal and the delayed color under signal, so that the arithmetic output is obtained from the junction between the resistance element and the capacitor. As a result, the phase shift and the arithmetic operations can be realized by a simple circuit.

Thanks to the feature of the arithmetic output obtained from the junction between the resistance element and the capacitor. By using a simple structure for extracting the f_{H}/3 component and rectifying it, it is possible to judge that the system is the SECAM system when the f_{H}/3 component is detected, and it is the PAL system when not detected.

As the aforementioned signal dectector, the first full-wave rectifier for receiving the arithmetic output; the sampling & hold circuit for sampling and holding the output of the first full-wave rectifier with the burst gate pulse; the high-pass filter for differentiating the output signal of the sampling & hold circuit; the second full-wave rectifier for rectifying the output signal of the high-pass filter; and the low-pass filter for smoothing the output signal of the second full-wave rectifier. As a result, the simple circuit can be incorporated in the semiconductor integrated circuit.

The color under signal inputted to the delay circuit is fed to the first frequency converter for outputting the first standard color signal; the delayed color under signal is fed to the second frequency converter for outputting the second standard color signal; the first and second standard color signals, which are outputted from the first and second frequency converters, are set in phase or in anti-phase and fed to the arithmetic circuit; and the color crosstalk component between the tracks is removed by subtracting or adding the first and second standard color signals. As a result, the delay circuit for processing the color under signal can be used as it is for the mode discriminator.

The PAL and SECAM modes can be discriminated without using any ceramic filter or any large-sized induction of several mH. As a result, the VTR device having the mode discriminator mounted thereon can be reduced in size, weight and cost.

## Claims

1. A VTR mode discrimination method comprising the steps of phase-shifting both a signal generated by delaying a color under signal by two horizontal periods, and said color under signal by +45 degrees and by -45 degrees, respectively; adding or subtracting the phase-shifted signals; and utilizing the change in the arithmetic output for every horizontal period, to judge whether said color under signal is of the PAL system or of the SECAM system.

2. A VTR mode discrimination method according to claim 1, wherein said color under signal is converted into a first standard color signal by a first frequency converter whereas said delayed color under signal is converted into a second standard color signal by a second frequency converter, and said first and second standard color signals are set in phase and in anti-phase and are subtracted or added to remove the color crosstalk component between tracks.

3. A VTR mode discriminator comprising: a delay circuit for delaying a color under signal fed from an input terminal, by two horizontal periods; phase circuits for shifting the phases of a color under signal fed from said input terminal and the delayed color under signal by +45 degrees and -45 degrees, respectively; an arithmetic circuit for adding or subtracting the two signals whose phases are shifted by said phase circuits; and a signal detector for detecting the change in the arithmetic output for every horizontal period, whereby said signal detector produces a discrimination signal for discriminating between the color under signals of the PAL system and the SECAM system.

4. A VTR mode discriminator according to claim 3, wherein said phase circuits and said arithmetic circuit comprise a resistance element and a capacitor in series, and are fed at the two ends with the color under signal fed from the input terminal and the delayed color under signal, and the arithmetic output is obtained from the junction between said resistance element and said capacitor.

5. A VTR mode discriminator according to claim 4, wherein said signal detector includes: a first full-wave rectifier for receiving said arithmetic output; a sampling & hold circuit for sampling and holding the output of said first full-wave rectifier with a burst gate pulse; a high-pass filter for differentiating the output signal of said sampling & hold circuit; a second full-wave rectifier for rectifying the output signal of said high-pass filter; and a low-pass filter for smoothing the output signal of said second full-wave rectifier, whereby said discrimination signal is produced on the basis of the output level of said low-pass filter.

6. A VTR mode discriminator according to claim 5, wherein the color under signal inputted to said delay circuit is fed to a first frequency converter for outputting a first standard color signal; the delayed color under signal is fed to a second frequency converter for outputting a second standard color signal, the first and second standard color signals, outputted from said first and second frequency converters are set in phase or in anti-phase and fed to said arithmetic circuit, and the color crosstalk component between tracks is removed by subtracting or adding said first and second standard color signals.

7. A VTR mode discriminator according to claim 4, wherein the arithmetic output signal obtained from the junction between said resistor and said capacitor is fed to a frequency discriminator, and the system is judged to be the SECAM system when a component whose frequency is 1/3 of the horizontal period is detected by said frequency discriminator and to be the PAL system when said frequency component is not detected.

8. A VTR system comprising a discriminator mounted thereon for discriminating the color system of a color under signal to be recorded on or reproduced from a magnetic tape,
wherein said discriminator includes:
a delay circuit for delaying the color under signal, which is fed from an input terminal, by two horizontal periods;
phase circuits for phase-shifting the color under signal, which is fed from said input terminal, and the delayed color under signal, respectively, by +45 degrees and by -45 degrees;
an arithmetic circuit for adding or subtracting the color under signal whose phase are shifted by said phase circuits, and said delayed color under signal; and
a signal detector for detecting the change in the output signal of said arithmetic circuit for every horizontal period.
